Europäisches Patentamt

European Patent Office

Office européen des brevets

(19)

(11) **EP 0 596 986 B2**

(12) **NEUE EUROPÄISCHE PATENTSCHRIFT**

(45) Veröffentlichungstag und Bekanntmachung des Hinweises auf die Entscheidung über den Einspruch:
**28.10.1998 Patentblatt 1998/44**

(45) Hinweis auf die Patenterteilung:
**18.10.1995 Patentblatt 1995/42**

(21) Anmeldenummer: **92916596.7**

(22) Anmeldetag: **27.07.1992**

(51) Int. Cl.⁶: $A61C\ 7/10$

(86) Internationale Anmeldenummer:
**PCT/EP92/01698**

(87) Internationale Veröffentlichungsnummer:
**WO 93/02629 (18.02.1993 Gazette 1993/05)**

(54) **DEHNSCHRAUBE ZUR ZAHNREGULIERUNG**

EXPANDING SCREW FOR TOOTH ADJUSTMENT

VIS ORTHODONTIQUE D'EXTENSION

(84) Benannte Vertragsstaaten:
**DE FR IT**

(30) Priorität: **03.08.1991 DE 4125853**

(43) Veröffentlichungstag der Anmeldung:
**18.05.1994 Patentblatt 1994/20**

(73) Patentinhaber:
**DENTAURUM
J.P. WINKELSTROETER KG
75228 Ispringen (DE)**

(72) Erfinder:
 • **BINDER, Friedrich
D-7531 Kieselbronn (DE)**
 • **KALYTTA, Horst
D-7530 Pforzheim (DE)**
 • **RAPP, Manfred
D-7530 Pforzheim (DE)**
 • **RÖHLCKE, Friedrich-Wilhelm
D-7539 Kämpfelbach-Bilfingen (DE)**
 • **WALTER, Berthold
D-7537 Remchingen-Singen (DE)**

(74) Vertreter:
**Hoeger, Stellrecht & Partner
Uhlandstrasse 14 c
70182 Stuttgart (DE)**

(56) Entgegenhaltungen:
EP-A- 0 304 756          CH-A-   526 301
CH-A-   577 309          DE-A- 2 712 696
DE-A- 2 722 611          DE-A- 3 301 753
DE-A- 3 504 379          DE-U- 1 932 323
US-A- 4 917 601

 • **Einführung in die Kieferorthopädie, Harald
Schienbein, Urban & Schwarzenberg München-
Wien-Baltimore 1979, S. 118**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft eine Dehnschraube zur Zahnregulierung gemäß dem Oberbegriff von Anspruch 1.

Eine derartige Dehnschraube ist aus der DE-A-3 301 753 bekannt.

Es gibt zwei gängige Typen von Dehnschrauben, mit denen die von der Dehnschraube ausgeübten Kräfte auf unterschiedliche Weise auf den Zahn bzw. die Zähne, dessen bzw. deren Stellung korrigiert werden soll, übertragen werden: Bei Dehnschrauben eines ersten Typs wird die betreffende Dehnschraube in eine aus Gießharz gegossene Gaumenplatte eingebettet und letztere so in zwei Teile aufgetrennt, daß sich in jedem Gaumenplattenteil einer der beiden Dehnschraubenkörperteile der Dehnschraube befindet und sich so durch Drehen der Gewindespindel der Dehnschraube der Abstand der beiden Gaumenplattenteile voneinander verändern läßt. Beim Gießen der Gaumenplatte werden in dieser auch z.B. klammerförmige Verankerungselemente befestigt, die dann an Zähnen angreifen, so daß die Dehnschraubenkräfte über die Gaumenplattenteile auf die betreffenden Zähne übertragen werden. Ein solcher Dehnschraubentyp ist z.B. in Figur 3 der DE-PS 33 01 753 dargestellt. Beim zweiten Dehnschraubentyp sind an jedem der beiden Dehnschraubenkörperteile zwei Stangen oder steife Drähte befestigt, insbesondere angeschweißt, mit denen der betreffende Dehnschraubenkörperteil unmittelbar an auf den Zähnen befestigten Metallbändern verankert werden kann. Eine Dehnschraube dieses Typs ist z.B. in Figur 2 der US-PS 4,917,601 dargestellt.

Wenn vorstehend oder im folgenden von einer Zahnregulierung oder von der Korrektur der Stellung eines Zahns oder mehrerer Zähne die Rede ist, so soll hierunter z.B. auch die Erweiterung der Kiefernaht verstanden werden, da eine Kiefernahterweiterung selbstverständlich auch eine Änderung der Zahnstellung zur Folge hat.

Wie eingangs zum Ausdruck gebracht wurde, befaßt sich die vorliegende Erfindung mit Dehnschrauben des ersten Typs, d.h. mit Dehnschrauben, welche in Verbindung mit einer Kunststoff-Gaumenplatte eingesetzt werden, bei deren Herstellung die beiden Dehnschraubenkörperteile in das Gießharz der Gaumenplatte eingebettet werden.

Eine Dehnschraube der eingangs erwähnten Art ist bekannt; diese bekannte Dehnschraube entspricht derjenigen nach der DE-PS 33 01 753, sie ist jedoch mit Retentionen in Form kurzer, gerader Nuten versehen, welche - in der Seitenansicht der Dehnschraube - vor und hinter der Gewindespindel sowie an den äußeren Schmalseiten der beiden Dehnschraubenkörperteile angeordnet sind.

Diese bekannte Dehnschraube besitzt zwei zu beiden Seiten der Gewindespindel angeordnete Führungsstifte, welche in Führungsöffnungen beider Dehnschraubenkörperteile verschiebbar geführt sind; die letzteren weisen im Schnitt längs der von den Längsmittelachsen von Gewindespindel und Führungsstiften definierten Ebene einen rechteckigen Querschnitt auf, und der Mittelabschnitt der Gewindespindel hat die Gestalt eines verdickten, kreiszylindrischen Bunds (Spindelkopf) mit einer Querbohrung zum Einstecken eines Dorns, mit dem sich die Gewindespindel drehen läßt. Die Führungsöffnungen der beiden Dehnschraubenkörperteile besitzen jeweils die Gestalt einer abgesetzten Bohrung, deren erster, dem Spindelkopf zugewandter Abschnitt einen dem Durchmesser der Führungsstifte entsprechenden Durchmesser besitzt und an den sich ein Bohrungsabschnitt größeren Durchmessers anschließt, in den bei einem durch Drehen der Gewindespindel bewirkten Auseinanderfahren der Dehnschraubenkörperteile kopfförmige, verdickte und als Anschläge wirkende Enden der Führungsstifte einfahren können, bis diese Anschläge an den Schultern anliegen, welche die zweiten Bohrungsabschnitte am Übergang zu den ersten Bohrungsabschnitten bilden. Bei dieser bekannten Dehnschraube ist der maximale Weg eines Dehnschraubenkörperteils gleich der halben Länge eines Führungsstifts (ohne dessen verdickte Enden gerechnet) abzüglich der Länge des ersten Bohrungsabschnitts kleineren Durchmessers und abzüglich der halben Breite des Spindelkopfs (gemessen in Gewindespindel-Längsrichtung), vorausgesetzt, beide Führungsstifte sind gleich lang und höchstens so lang wie die Gewindespindel.

Da derartige Dehnschrauben im Mund zu tragen sind, wo es je nach Lage des Zahns bzw. der Zähne, dessen bzw. deren Stellung zu korrigieren ist, aufgrund der beengten Platzverhältnisse auf jeden Millimeter ankommt, lag der Erfindung die Aufgabe zugrunde, eine Dehnschraube der eingangs erwähnten Art zu schaffen, welche bei vorgegebenem maximalem Dehnweg kleiner ist als die vorstehend beschriebene bekannte Dehnschraube, ohne daß durch die Verkleinerung die Funktion der Dehnschraube beeinträchtigt wird (dabei wird unter dem maximalen Dehnweg die maximal mögliche Veränderung des Abstands der einander zugewandten inneren Stirnseiten der Dehnschraubenkörperteile voneinander verstanden).

Diese Aufgabe läßt sich erfindungsgemäß durch die Merkmale des Anspruchs 1 lösen.

Während die Dehnschraubenkörperteile sowohl der Dehnschraube nach der vorstehend erörterten DE-PS 33 01 753, als auch der Dehnschraube nach der US-PS 4,917,601 blockförmig, d.h. in der Seitenansicht rechteckig ausgebildet sind, ist die erfindungsgemäße Dehnschraube aufgrund ihrer abgestuften Dehnschraubenkörperteile viel zierlicher, und außerdem wird durch die erfindungsgemäße Ausbildung der Dehnschraube ein verhältnismäßig breiter Spalt zwischen den Dehnschraubenkörperteilen vermieden - werden nicht besondere Maßnahmen ergriffen, fließt bei der Herstellung der Gaumenplatte das Gießharz in diesen Spalt der bekannten Dehnschrauben hinein, was sich auf die Betätigung der Gewindespindel nachteilig auswirken kann. Schließlich läßt sich bei der Herstellung der erfindungsgemäßen Dehnschraube auch Material für die Dehnschraubenkörperteile einsparen, was insbesondere dann ins Gewicht fällt, wenn letztere aus einem teuren Werkstoff hergestellt werden; mit der Materialeinsparung geht natürlich auch eine Verringerung des Gewichts der Dehnschraube einher. Andererseits hat die Verkleinerung des Dehnschraubenkörpers dank der erfindungsgemäßen Anordnung der Retentionen an den die Gewindespindel umfassenden ersten Bereichen der beiden Dehnschraubenkörperteile keine nachteiligen Auswirkungen auf die Qualität der Gleitführung des Führungsstifts in den Führungsöffnungen der Dehnschraubenkörperteile - von den Dehnschraubenkörperteilen sind beträchtliche Kräfte auf die Teile der Gaumenplatte zu übertragen; würde man Retentionen an den verhältnismäßig dünnen zweiten Bereichen der Dehnschraubenkörperteile vorsehen, insbesondere an den äußeren Schmalseiten dieser zweiten Bereiche der Dehnschraubenkörperteile, bestünde aufgrund der zu übertragenden Kräfte die Gefahr, daß durch diese Kräfte die schmalen zweiten Bereiche der Dehnschraubenkörperteile gegenüber den die Gewindespindel umfassenden ersten Bereichen ausgelenkt oder sogar verbogen und damit die Führungsöffnungen am Führungsstift verkantet werden.

Gewisse Merkmale der erfindungsgemäßen Lösung sind zwar aus dem Stand der Technik bekannt, dennoch konnten die bekannten Dehnschrauben die erfindungsgemäße Kombination aber nicht nahelegen, weil es keine der bekannten Dehnschrauben lehrte, wie eine in eine Gaumenplatte einzubettende Dehnschraube auszubilden ist, um sie einerseits möglichst zierlich zu gestalten, andererseits aber trotz der hohen, von der Dehnschraube auf die Gaumenplattenteile zu übertragenden Kräfte eine gute Gleitführung für den Führungsstift zu gewährleisten. Im einzelnen sei bezüglich des Standes der Technik noch auf folgende vorbekannte Dehnschrauben verwiesen: Bei der Dehnschraube nach der US-PS 4,917,601 handelt es sich, wie bereits erwähnt, um eine Dehnschraube, an deren Dehnschraubenkörperteilen Stangen angeschweißt sind, mit denen die Dehnschraube unmittelbar an auf den Zähnen befestigten Metallbändern verankert werden soll. Die beiden Dehnschraubenkörperteile dieser bekannten Dehnschraube besitzen an ihren einander zugewandten Stirnseiten Aussparungen zur Aufnahme des Spindelkopfs der Gewindespindel, sodaß im Ausgangszustand der Dehnschraube die inneren Stirnseiten der beiden Dehnschraubenkörperteile gegeneinander anliegen und die Aussparungen ein Fenster bilden, durch welches im Ausgangszustand der Dehnschraube die Werkzeug-Ansetzstelle des Spindelkopfs von außen zugänglich ist. Wie bereits erwähnt, sind bei dieser bekannten Dehnschraube die beiden Dehnschraubenkörperteile jedoch blockartig ausgebildet, d.h. in der Seitenansicht ungefähr rechteckförmig, und Retentionen sind an den Dehnschraubenkörperteilen nicht vorgesehen, weil letztere mit den erwähnten Stangen unmittelbar an Zähnen verankert werden.

Nichts anderes gilt für eine andere bekannte Dehnschraube, welche sich aus der DE-PS 27 12 696 ergibt und sich von der Dehnschraube nach der US-PS 4,917,601 im wesentlichen nur dadurch unterscheidet, daß zwei der vier der unmittelbaren Verankerungen der Dehnschraube an Zähnen dienenden Stangen gleichzeitig Führungsstifte bilden.

Aus dem DE-GM 1 932 323 ergibt sich eine zum Einbetten in eine Kunststoff-Gaumenplatte vorgesehene Dehnschraube, deren Dehnschraubenkörperteile beim Einbetten der Dehnschraube in eine Gaumenplatte einen plättchenförmigen Dehnschraubenhalter zwischen sich aufnehmen, welcher den Spindelkopf der Gewindespindel umschließt, so daß die Dehnschraubenkörperteile einander nur so weit angenähert werden können, daß ihr Abstand gleich der Dicke des Dehnschraubenhalters bzw. gleich der axialen Länge des Spindelkopfs ist. Die beiden Dehnschraubenkörperteile dieser bekannten Dehnschraube sind in der Seitenansicht ungefähr "hutförmig" gestaltet und besitzen jeweils einen mittleren ersten Bereich, welcher die Gewindespindel umfaßt, sowie zwei sich von diesem mittleren Bereich nach der Seite zu erstreckende flache zweite Bereiche mit Führungsöffnungen für Führungsstifte. Retentionen sind bei dieser bekannten Dehnschraube überhaupt nicht vorgesehen. Schließlich ergibt sich aus der DE-PS 824 832 noch eine Dehnschraube einer völlig anderen Art mit zwei blockartig, d.h. in der Seitenansicht ungefähr rechteckig ausgebildeten Dehnschraubenkörperteilen, welche an ihren einander zugewandten inneren Stirnseiten jeweils eine Aussparung zur Aufnahme des Spindelkopfs der Gewindespindel besitzen. An diese Aussparungen schließt sich jeweils eine abgestufte Bohrung an, deren innerer, im Durchmesser kleinerer Teil von der Gewindespindel durchsetzt wird und deren äußerer, im Durchmesser größerer Teil eine Mutter für die Gewindespindel aufnimmt, die durch eine Schraubendruckfeder gegen die von der Bohrung gebildete Schulter angepreßt wird. Zum Halten der beiden Druckfedern in den Dehnschraubenkörperteilen ist auf deren voneinander abgewandte, äußere Stirnseiten jeweils ein Deckel aufgesetzt, von denen der eine von zwei Führungsstiften durchdrungen wird, welche in dem zum anderen Deckel gehörenden Dehnschraubenkörperteil festgelegt sind. Um die beiden blockartigen Dehnschraubenkörperteile herum laufen Ringnuten, welche Retentionen zum Verankern der Dehnschraubenkörperteile in den Teilen einer Gaumenplatte bilden. Ein Dehnschraubenhalter ist bei dieser bekannten Dehnschraube nicht vorgesehen.

Die erfindungsgemäße Lösung ermöglicht es auch, durch eine entsprechende Bemessung der Dicke (in Gewindespindellängsrichtung gemessen) der die Führungsöffnungen für den Führungsstift bzw. die Führungsstifte aufnehmenden zweiten Bereiche der Dehnschraubenkörperteile den maximalen Dehnweg der erfindungsgemäßen Dehnschraube so zu vergrößern, daß er denjenigen der bekannten Dehnschraube nach der DE-PS 33 01 753 übertrifft (bei gleicher Länge von Gewindespindel und Führungsstift bzw. Führungsstiften), und zwar um die in Gewindespindellängsrichtung gemessene Breite des Gewindespindel-Mittelabschnitts (des Spindelkopfs der bekannten Dehnschraube), weil im Ausgangszustand der erfindungsgemäßen Dehnschraube deren Dehnschraubenkörperteile den Gewindespindel-Mittelabschnitt vollständig aufnehmen können - es ist dann nur erforderlich, die Dehnschraubenkörperteile so zu gestalten, daß die Werkzeug-Ansetzstelle der Gewindespindel für ein entsprechendes Werkzeug auch dann noch hinreichend zugänglich ist, wenn die beiden Dehnschraubenkörperteile einander so weit angenähert wurden, daß sie gegeneinander anliegen.

Wenn vorstehend davon die Rede war, daß die einander zugewandten inneren Stirnseiten der beiden Dehnschraubenkörperteile gegeneinander anlegbar sein sollen, so bedeutet dies keineswegs, daß diese inneren Stirnseiten jeweils eine Ebene oder gar eine senkrecht zur Spindelachse verlaufende Ebene bilden, und diesbezüglich kann auf die später noch zu beschreibenden Ausführungsformen der erfindungsgemäßen Dehnschraube verwiesen werden.

Bei der erfindungsgemäßen Dehnschraube sollte der Führungsstift bzw. sollten die Führungsstifte in beiden Dehnschraubenkörperteilen frei verschiebbar sein, sieht man von ggf. vorgesehenen Endanschlägen ab.

Die Erfindung setzt nicht voraus, daß der mit der Werkzeug-Ansetzstelle versehene Mittelabschnitt der Gewindespindel als verdickter Spindelkopf ausgebildet ist; dieser Gewindespindel-Mittelabschnitt könnte denselben oder sogar einen etwas geringeren Außendurchmesser aufweisen als die mit Gewinden versehenen Gewindeabschnitte, da es nur darauf ankommt, daß die Aussparung an wenigstens einem der beiden Dehnschraubenkörperteile auf mindestens einer Seite, vorzugsweise auf beiden Seiten der zusammengefahrenen Dehnschraubenkörperteile eine Art Fenster bildet, durch das sich ein Werkzeug zum Drehen der Gewindespindel an dieser ansetzen läßt.

Eine minimale Länge des Führungsstifts bzw. der Führungsstifte (bei vorgegebenem maximalem Dehnweg der Dehnschraube) ergibt sich dann, wenn im Ausgangszustand der Dehnschraube die inneren Stirseiten der Dehnschraubenkörperteile im Bereich ihrer Führungsöffnungen gegeneinander anliegen.

Die mit gegenläufigen Gewinden versehenen Abschnitte der Gewindespindel könnten ohne einen gewindefreien Bereich der Gewindespindel unmittelbar aneinandergrenzen, wenn man als Werkzeug-Ansetzstelle eine Querbohrung wählt. In diesem Fall könnten sich die Innengewinde der Dehnschraubenkörperteile bis an deren einander zugewandte, innere Stirnseiten erstrecken. Bei erfindungsgemäßen Dehnschrauben, bei denen der Gewindespindel-Mittelabschnitt als verdickter Spindelkopf ausgebildet ist, weist der Kanal mindestens eines der Dehnschraubenkörperteile an dessen innere Stirnseite angrenzend jedoch eine gegenüber seinem Innengewinde erweiterte Aussparung zur Aufnahme des Gewindespindel-Mittelabschnitts auf. In diesem Zusammenhang sei auf folgendes hingewiesen: Grundsätzlich kommt es für die Funktion einer Dehnschraube nur auf die Veränderung des Abstands der beiden Dehnschraubenkörperteile voneinander an; deshalb wäre es z.B. auch möglich, im Ausgangszustand einer Dehnschraube den Spindelkopf ihrer Gewindespindel gänzlich in einem der beiden Dehnschraubenkörperteile unterzubringen, so wie dies beispielsweise die DE-PS 27 12 696 zeigt. Dann genügt es, nur eines der beiden Dehnschraubenkörperteile mit einer gegenüber seinem Innengewinde erweiterten Aussparung zur Aufnahme des Gewindespindel-Mittelabschnitts zu versehen und auch nur an diesem Dehnschraubenkörperteil eine Aussparung vorzusehen, durch welche im Ausgangszustand der Dehnschraube die Werkzeug-Ansetzstelle der Gewindespindel von außen zugänglich ist. Aus den vorstehend geschilderten Gründen müssen die beiden gegenläufigen Gewinde der Gewindespindel auch nicht dieselbe Gewindesteigung aufweisen (entsprechendes gilt dann für die Innengewinde der Dehnschraubenkörperteile), woraus man sieht, daß sich der Gewindespindel-Mittelabschnitt durchaus nicht exakt in der Mitte der Gewindespindel befinden muß und im Ausgangszustand der Dehnschraube nur in eines der beiden Dehnschraubenkörperteile eintauchen kann. Bei einer bevorzugten Ausführungsform der erfindungsgemäßen Dehnschraube besitzen jedoch die Kanäle beider Dehnschraubenkörperteile eine erweiterte Aussparung zur Aufnahme jeweils des halben, als Spindelkopf ausgebildeten Gewindespindel-Mittelabschnitts.

Aus den vorstehenden Erläuterungen ergibt sich, daß sich ein wesentliches Konstruktionsmerkmal der erfindungsgemäßen Dehnschraube auch so definieren läßt, daß die in den Dehnschraubenkörperteilen vorgesehenen Kanäle für die Gewindespindel so ausgebildet sind, daß sie im Ausgangszustand der Dehnschraube den Gewindespindel-Mittelabschnitt der Gewindespindel bis auf ein Fenster, durch das die Werkzeug-Ansetzstelle der Gewindespindel von außen zugänglich ist, aufnehmen und daß sich die Führungsflächen der Führungsöffnungen für den Führungsstift bzw. die Führungsstifte bis an diejenigen Bereiche der inneren Stirnflächen der Dehnschraubenkörperteile erstrekken, die im Ausgangszustand der Dehnschraube gegeneinander anliegen.

Auch bei der erfindungsgemäßen Dehnschraube werden Ausführungsformen bevorzugt, bei denen zwei zu beiden Seiten der Gewindespindel angeordnete Führungsstifte vorgesehen sind; in diesem Fall empfiehlt es sich, die Dehnschraube so zu gestalten, daß jedes Dehnschraubenkörperteil im Schnitt längs der von den Längsmittelachsen von Gewindespindel und wenigstens einem der Führungsstifte definierten Ebene einen ungefähr hutförmigen Querschnitt aufweist, wobei die die Führungsöffnungen aufnehmenden zweiten Bereiche des jeweiligen Dehnschraubenkörperteils sozusagen die Krempe des Huts bilden.

Ganz besonders vorteilhaft ist es, wenn die Dehnschraube zu einer Längsmittelebene symmetrisch ausgebildet ist, welche durch die Längsmittelachse der Gewindespindel und senkrecht zu derjenigen Ebene verläuft, die von den Längsmittelachsen von Gewindespindel und Führungsstiften definiert wird. Nach einem weiteren Merkmal der Erfindung ist die Dehnschraube symmetrisch zu letztgenannter Ebene ausgebildet.

Um ein Herausfallen der Führungsstifte aus den Dehnschraubenkörperteilen zu verhindern, empfiehlt sich eine Ausführungsform, bei der der Führungsstift als zylindrischer Körper ausgebildet ist, dessen beide Enden zur Bildung von mit den äußeren Stirnseiten der Dehnschraubenkörperteile zusammenwirkenden Anschlägen von der Zylinderform abweichend ausgebildet sind. Dabei wird empfohlen, diese Anschläge dadurch zu bilden, daß man in die Stirnseiten der Führungsstifte Kerben einschlägt.

Um eine Dehnschraube beim Gießen der Gaumenplatte in der richtigen Position zu halten, ist es üblich, die Dehnschraube mit einem sogenannten Dehnschraubenhalter zu versehen, bei dem es sich um ein Kunststoffplättchen handelt, das Öffnungen für den Durchtritt der Gewindespindel und der Führungsstifte aufweist und bei den bekannten Dehnschrauben den Spindelkopf umfaßt und zwischen den auf den geringstmöglichen Abstand zusammengefahrenen Dehnschraubenkörperteilen angeordnet ist. In diesem Zusammenhang sei aber darauf hingewiesen, daß ein Dehnschraubenhalter nicht unbedingt erforderlich ist, weil man die Dehnschraube auch mit Klebewachs auf der Form zum Gießen der Gaumenplatte fixieren und den Spindelkopf mit Wachs abdecken könnte, um so zu verhindern, daß seine Werkzeug-Ansetzstelle durch das Gießharz überdeckt wird.

Die Erfindung schlägt nun einen völlig anderen Weg vor, soll eine erfindungsgemäße Dehnschraube mit einem Dehnschraubenhalter versehen werden: Es wird nämlich ein die zusammengefahrenen Dehnschraubenkörperteile umfaßender Dehnschraubenhalter vorgeschlagen, welcher vollständig außerhalb der Fuge zwischen den Dehnschraubenkörperteilen liegt und vorzugsweise die Werkzeug-Ansetzstelle der Gewindespindel abdeckt. Auf diese Weise steht der Dehnschraubenhalter einem vollständigen Zusammenfahren der beiden Dehnschraubenkörperteile nicht im Wege. Für besonders vorteilhafte Ausführungsformen wird vorgeschlagen, den Dehnschraubenhalter so zu gestalten, daß er die beiden zusammengefahrenen Dehnschraubenkörperteile im Bereich der sich zwischen ihnen befindenden Fuge vollständig umfaßt und dabei das Fenster bzw. die Fenster abdeckt, welches bzw. welche durch die an den inneren Stirnseiten der Dehnschraubenkörperteile vorgesehenen Aussparungen gebildet wird bzw. werden. Dann verhindert der Dehnschraubenhalter ein Eindringen des Gießharzes in die Fuge zwischen den beiden Dehnschraubenkörperteilen ebenso wie ein Überdecken der Werkzeug-Ansetzstelle der Gewindespindel durch das Gießharz.

Würde man bei einer Dehnschraube mit einem solchen Dehnschraubenhalter Retentionen an den äußeren Schmalseiten der verhältnismäßig dünnen zweiten Bereiche der Dehnschraubenkörperteile vorsehen, würden diese Retentionen durch den Dehnschraubenhalter zumindest weitgehend abgedeckt werden, was einer guten Verankerung der Dehnschraubenkörperteile in den Gaumenplattenteilen entgegenstünde. Dank der erfindungsgemäßen Anordnung der Retentionen an den die Gewindespindel umfassenden ersten Bereichen der Dehnschraubenkörperteile lassen sich letztere in einer Gaumenplatte gut verankern, obwohl der Dehnschraubenhalter die zusammengefahrenen Dehnschraubenkörperteile umfaßt und nicht, wie dies bei den bekannten Dehnschrauben der Fall ist, zwischen den Dehnschraubenkörperteilen liegt.

Um die Montage der Dehnschraube samt dem Dehnschraubenhalter zu vereinfachen und zu gewährleisten, daß der Dehnschraubenhalter die Werkzeug-Ansetzstelle der Gewindespindel zuverlässig abdeckt, empfiehlt es sich schließlich, mindestens eines der beiden Dehnschraubenkörperteile mit einem in Richtung der Gewindespindelachse wirksamen Anschlag für den Dehnschraubenhalter zu versehen.

Eine besonders rationelle Fertigung der erfindungsgemäßen Dehnschraube ermöglicht eine Ausführungsform, bei der die beiden Dehnschraubenkörperteile, abgesehen von ihren Innengewinden und einem ggf. vorgesehenen Anschlag für den Dehnschraubenhalter, identisch ausgebildet sind.

Die Retentionen könnten die Form von Rändelungen oder z.B. geätzten, rauhen Oberflächenbereichen haben. Im Hinblick auf eine besonders gute Verankerung der Dehnschraubenkörperteile in den Gaumenplattenteilen werden jedoch nutförmige Retentionen bevorzugt, wobei es sich als besonders vorteilhaft und wirksam erwiesen hat, wenn die Retentionsnuten als Ringnuten ausgebildet sind, welche um die die Gewindespindel umfassenden ersten Bereiche der beiden Dehnschraubenkörperteile herumlaufen.

Weitere Vorteile, Merkmale und Einzelheiten der Erfindung ergeben sich aus der nachfolgenden Beschreibung sowie der beigefügten zeichnerischen Darstellung dreier besonders vorteilhafter Ausführungsformen der erfindungsgemäßen Dehnschraube; in der Zeichnung zeigen:

Fig. 1   einen Längsschnitt durch die erste Dehnschraube mit aufgesetztem Dehnschraubenhalter, und zwar einen Schnitt nach der Linie 1-1 in Fig. 2;

Fig. 2 einen Schnitt durch diese Dehnschraube samt Dehnschraubenhalter nach der Linie 2-2 in Fig. 1;

Fig. 3 den in Fig. 1 oben dargestellten Dehnschraubenkörperteil im selben Schnitt wie in Fig. 1;

Fig. 4 diesen Dehnschraubenkörperteil in Richtung des Pfeils "A" in Fig. 3 gesehen;

Fig. 5 eine Draufsicht auf diese Dehnschraube;

Fig. 6 eine der Fig. 1 entsprechende Darstellung der zweiten Ausführungsform der erfindungsgemäßen Dehnschraube, und

Fig. 7 eine der Fig. 1 entsprechende Darstellung der dritten Ausführungsform.

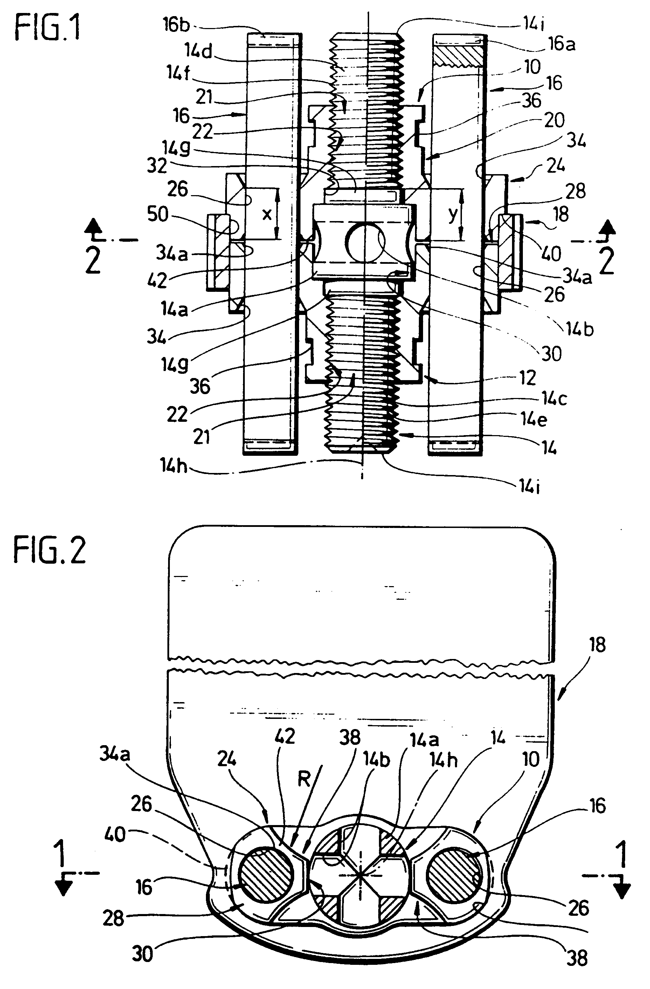

Die Dehnschraube nach den Fig. 1 bis 5 besteht aus einem ersten und einem zweiten Dehnschraubenkörperteil 10 bzw. 12, einer Gewindespindel 14, zwei Führungsstiften 16 und einem Dehnschraubenhalter 18.

Die Gewindespindel 14 besitzt einen erfindungsgemäß zentral angeordneten, verdickten Spindelkopf 14a mit zwei mittig angeordneten und senkrecht zueinander verlaufenden Querbohrungen 14b, sowie zwei zu beiden Seiten des Spindelkopfs angeordnete Gewindeabschnitte 14c und 14d mit gegenläufigen Gewinden 14e und 14f gleicher Steigung; letztere enden an Übergangsbereichen 14g, welche kreiszylindrisch ausgebildet sind und an den rotationssymmetrisch zur Spindelachse 14h ausgebildeten Spindelkopf 14a angrenzen sowie vorzugsweise denselben Außendurchmesser aufweisen wie die Gewindeabschnitte 14c und 14d. An die Stelle des dargestellten Übergangsbereichs 14g könnte aber auch eine Rille treten, in der das benachbarte Gewinde 14e bzw. 14f ausläuft.

Die Führungsstifte 16 sind bei der dargestellten bevorzugten Ausführungsform - sieht man von ihren Endbereichen ab - kreiszylindrisch ausgebildet, obwohl sie auch einen anderen Querschnitt haben könnten, d. h. sie könnten z.B. prismatisch gestaltet sein. Nach dem Zusammenbau der Dehnschraube werden in die Stirnseiten der Führungsstifte 16 Kerben 16a eingeschlagen, die zu einer geringfügigen Vergrößerung der Umfangsabmessungen der Enden der Führungsstifte führen, so daß diese Enden Anschläge bilden, die in Fig. 1 mit 16b bezeichnet wurden - die Abweichungen der Außenkontur dieser Anschläge von der Außenkontur der eigentlichen Führungsstifte 16 sind so geringfügig, daß sie in der Fig. 1 nicht zum Ausdruck kommen.

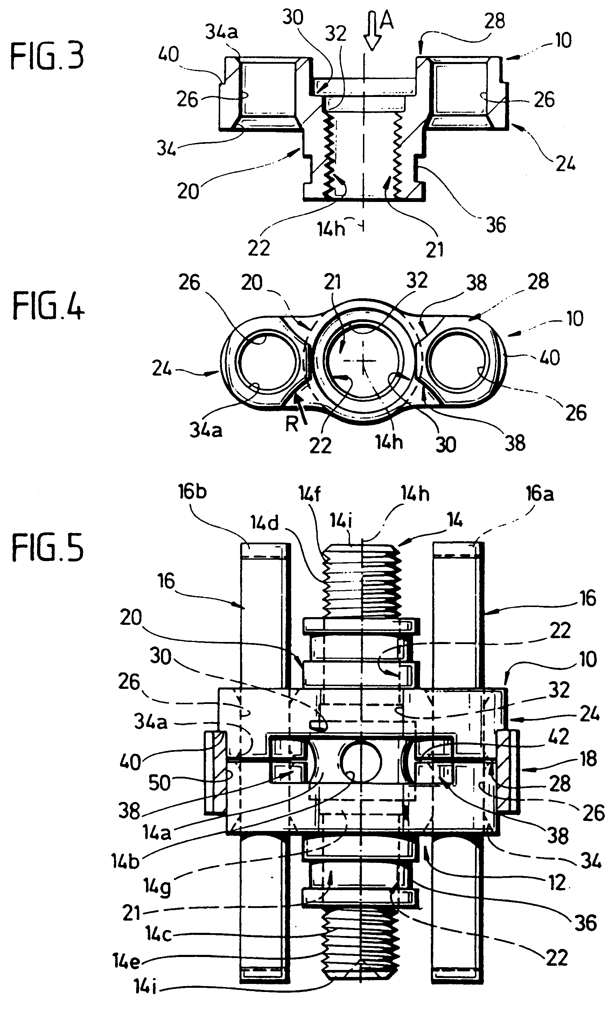

Anhand der Fig. 3 - 5 soll nun das in Fig. 1 oben dargestellte erste Dehnschraubenkörperteil 10 näher erläutert werden.

Dieses Dehnschraubenkörperteil besitzt zu beiden Seiten eines erfindungsgemäß halsartig ausgebildeten ersten Bereichs 20, in dem sich ein mit einem Innengewinde 22 versehener Kanal 21 befindet, jeweils einen zweiten Bereich 24 mit einer Führungsöffnung 26 für einen der Führungsstifte 16. Von einer im Innern der Dehnschraube liegenden inneren Stirnseite 28 des Dehnschraubenkörperteils aus erstreckt sich in dieses hinein eine Aussparung 30, deren Form erfindungsgemäß so an diejenige des Spindelkopfs 14a angepaßt ist, daß die Aussparung 30 ungefähr die Hälfte des Spindelkopfs 14a aufnehmen kann und sich letzterer in dieser Aussparung drehen läßt. Zwischen dem Innengewinde 22 und der Aussparung 30 ist eine Ausnehmung 32 vorgesehen, die an die Abmessungen des Übergangsbereichs 14g der Gewindespindel 14 angepaßt ist, so daß sich dieser Übergangsbereich in der Ausnehmung 32 drehen kann. An der der inneren Stirnseite 28 gegenüberliegenden äußeren Stirnseite des Dehnschraubenkörperteils 10 sind die Führungsöffnungen 26 mit Ansenkungen 34 versehen, in die die Anschläge 16b der Führungsstifte 16 eintreten können. Schließlich ist im Außenumfang des halsartigen ersten Bereichs 20 eine kreisringförmige Retentionsnut 36 vorgesehen.

Erfindungsgemäß ist der Dehnschraubenkörperteil 10 an seinen beiden Breitseiten (gemäß Fig. 4 obere und untere Seite) mit jeweils einer Ausnehmung 38 versehen, die insbesondere als mit einem Radius R hergestellte Ausdrehung hergestellt wurde. Bei zusammengefahrenen, d.h. gegeneinander anliegenden Dehnschraubenkörperteilen 10 und 12 (so wie in Fig. 1 dargestellt) bilden diese Ausnehmungen 38 der beiden Dehnschraubenkörperteile auf jeder Dehnschraubenseite eine Art Fenster, durch welches der Spindelkopf 14a freigelegt wird, so daß sich durch dieses Fenster hindurch ein Dorn oder ein anderes geeignetes Werkzeug in eine der Querbohrungen 14b einstecken und sich mit seiner Hilfe die Gewindespindel 14 um einen Drehwinkel von z.B. 90° drehen läßt.

Die Ausnehmungen 38 können sich in Richtung der Spindelachse 14h von der inneren Stirnseite 28 ausgehend so weit in den Dehnschraubenkörperteil 10 hineinerstrecken, daß durch die von den Ausnehmungen 38 gebildeten Fenster der Spindelkopf 14a in seiner ganzen Breite (in Spindelachsrichtung gemessen) freigelegt wird, bevorzugt werden aber Ausführungsformen, bei denen sich die Ausnehmungen 38 in axialer Richtung nur so weit in das Dehnschraubenkörperteil 10 hineinerstrecken, daß die von diesen Ausnehmungen 38 gebildeten Fenster nur denjenigen Bereich des Spindelkopfs 14a freigeben, in dem sich die Querbohrungen 14b befinden, d.h. die axiale Erstrekkung dieser Fenster ist gleich dem Durchmesser der Querbohrungen 14b oder nur geringfügig größer.

Das zweite Dehnschraubenkörperteil 12 ist mit dem vorstehend beschriebenen ersten Dehnschraubenkörperteil 10, soweit bislang beschrieben, bis auf gegenläufige Innengewinde 22 identisch. Der Unterschied zwischen den beiden Dehnschraubenkörperteilen 10 und 12 besteht nur in wenigstens einem, vorzugsweise zwei am ersten Dehnschraubenkörperteil 10 ausgebildeten Anschlag bzw. Anschlägen 40 für den Dehnschraubenhalter 18, um so zu gewährleisten, daß letzterer die Fuge 42 zwischen den beiden Dehnschraubenkörperteilen 10 und 12 sowie die beiden von den Ausnehmungen 38 gebildeten Fenster abdeckt - beim Eingießen der Dehnschraube in eine aus einem Gießharz hergestellte Gaumenplatte befindet sich die Dehnschraube in dem in Fig. 1 gezeigten Zustand, d.h. die beiden Dehnschraubenkörperteile 10 und 12 sind zusammengefahren und liegen gegeneinander an, so daß durch die vom Dehnschraubenhalter 18 gebildete Abdeckung gewährleistet werden kann, daß kein Gießharz in die Fuge 42 und in die Querbohrungen 14b einfließen kann.

Der in den Fig. 1 und 2 gezeigte Dehnschraubenhalter 18 hat, wie bereits erwähnt, die Gestalt eines Kunststoffplättchens mit einer Öffnung 50, deren Gestalt der Außenkontur des von den beiden Dehnschraubenkörperteilen 10 und 12 gebildeten Dehnschraubenkörpers entspricht, und zwar der Außenkontur bei Betrachtung des Dehnschraubenkörpers in Richtung der Spindelachse 14h.

Natürlich wird vor Betätigung der Dehnschraube der Dehnschraubenhalter 18 entfernt. Durch Drehen der Gewindespindel 14 lassen sich dann die beiden Dehnschraubenkörperteile 10 und 12 so weit auseinanderfahren, bis die Anschläge 16b der Führungsstifte 16 in die Ansenkungen 34 der beiden Dehnschraubenkörperteile 10, 12 eingetreten sind und gegen diese Dehnschraubenkörperteile anschlagen. Natürlich muß zu diesem Zweck die Gewindespindel 14 so lang gemacht werden, daß dann ihre Gewindeabschnitte 14c und 14d immer noch in die Innengewinde 22 der beiden Dehnschraubenkörperteile 10, 12 eingreifen.

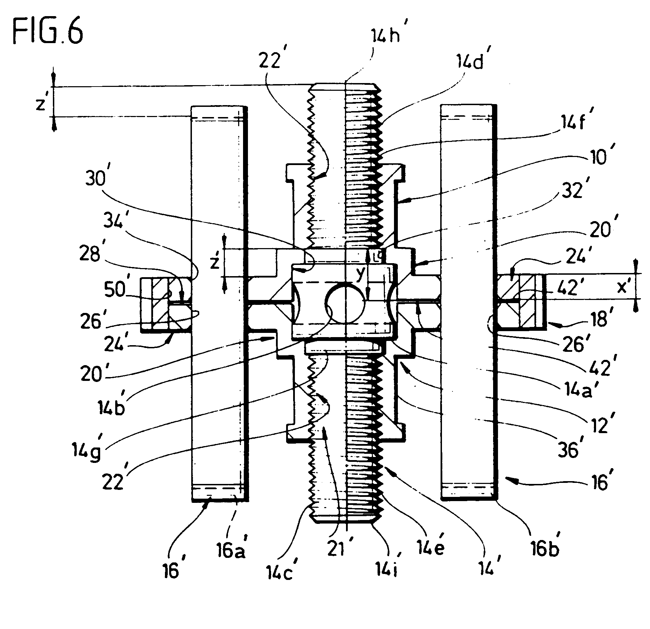

Die Fig. 6 zeigt die zweite Ausführungsform in einem der Fig. 1 entsprechenden Schnitt, und die verschiedenen Teile dieser Dehnschraube wurden mit denselben Bezugszeichen wie in Fig. 1, jedoch unter Hinzufügung eines Strichs, bezeichnet. Während jedoch bei der Ausführungsform nach Fig. 1 die Gewindespindel 14 und die Führungsstifte 16 gleich lang sind, weil erfindungsgemäß bei dieser Ausführungsform die Führungslänge "x" der Führungsöffnungen 26 der halben Gesamtlänge des Spindelkopfs 14a und der beiden Übergangsbereiche 14g (in Richtung der Spindelachse 14h gemessen) entspricht, d. h. in anderen Worten der Länge desjenigen Teils des entsprechenden Dehnschraubenkörperteils, der nicht mit dem Innengewinde 22 versehen ist, ist bei der Ausführungsform nach Fig. 6 erfindungsgemäß die Gewindespindel 14' länger als die Führungsstifte 16', und zwar aus folgendem Grund: Bei der Ausführungsform nach Fig. 6 ist erfindungsgemäß die Führungslänge "x'" der Führungsöffnungen 26' der Dehnschraubenkörperteile 10', 12' kleiner als das Maß "y'", und zwar um das Maß "z'", und um dieses Maß "z'" ist das Gewinde 14e' bzw. 14f' der Gewindespindel 14' länger als das entsprechende Gewinde der Gewindespindel 14. Dies bedeutet, daß die Gewindespindel 14' um den doppelten Betrag des Maßes "z'" länger ist als die Führungsstifte 16'.

Wenn vorstehend von der Länge der Gewindespindel und der Länge der Führungsstifte die Rede ist, wurden dabei die Längen der Anschläge 16a bzw. 16a' der Führungsstifte bzw. die Längen der gewindelosen Endbereiche 14i bzw. 14i' der Gewindespindel ebenso außer Betracht gelassen wie ein etwa zwischen den beiden Dehnschraubenkörperteilen anstelle der Fuge 42 bzw. 42' vorhandener schmaler Spalt, der sich in ungünstigen Fällen durch Drehwinkelversätze der Gewinde 14e, 14f bzw. 14e', 14f' und/oder der Innengewinde 22 bzw. 22' ergeben kann.

Unter dieser Voraussetzung ergibt ein Vergleich der beiden Ausführungsformen nach den Fig. 1 und 6, daß erfindungsgemäß die Länge L der Gewindespindel beträgt

$$L = l + (2\,y - 2\,x),$$

worin l die Länge der Führungsstifte, x die Führungslänge einer Führungsöffnung 26 (unter Vernachlässigung der Tiefe einer Ansenkung 34a an der inneren Stirnseite 28) und y die halbe Gesamtlänge des gewindelosen Mittelabschnitts der Gewindespindel bedeuten, wobei sich bei den dargestellten Ausführungsformen dieser gewindelose Mittelabschnitt aus dem Spindelkopf 14a bzw. 14a' und den gewindelosen Übergangsbereichen 14g bzw. 14g' zusammensetzt.

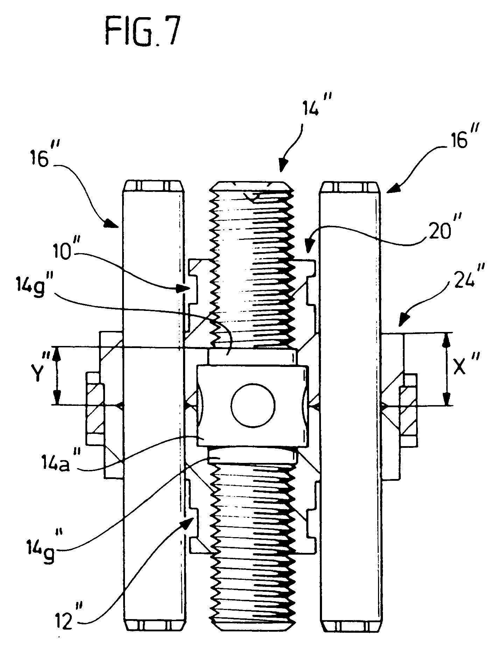

Während die Ausführungsformen nach den Fig. 1 bis 6 besonders große Dehnwege ergeben (bei vorgegebenen Längen von Gewindespindeln und Führungsstiften), besitzen bei der Ausführungsform nach Fig. 7 die Dehnschrauben-körperteile eine erhöhte Stabilität. In Fig. 7 wurden alle Teile mit denselben Bezugszeichen wie in den Fig. 1 bis 5 versehen, jedoch unter Hinzufügung zweier Striche, so daß im folgenden nur die Unterschiede zwischen der Ausführungsform nach Fig. 7 und der Ausführungsform nach den Fig. 1 bis 5 erläutert werden.

Bei der Ausführungsform nach Fig. 7 ist nämlich die halbe axiale Länge des Spindelkopfs 14a" zuzüglich der axialen Länge eines gewindelosen Übergangsbereichs 14g", nämlich die Länge y", kleiner als die Führungslänge x" (und zwar auch bei Berücksichtigung einer Ansenkung 34"), um die Steifigkeit am Übergang der zweiten Bereiche 24" in den ersten Bereich 20" der Dehnschraubenkörperteile zu erhöhen. Außerdem ergibt sich durch eine Vergrößerung der Dicke der zweiten Bereiche der Dehnschraubenkörperteile der Vorteil, daß sich letztere bei einer automatischen Montage der Dehnschraube an ihren seitlichen Rändern durch automatische Greifer sicher erfassen lassen.

Bei dieser Ausführungsform ist also die axiale Länge des gewindelosen Gewindespindel-Mittelabschnitts etwas größer als die Summe der Dicken der zweiten Bereiche 24" der beiden Dehnschraubenkörperteile.

**Patentansprüche**

1. Dehnschraube zur Zahnregulierung, mit zwei in jeweils eine Kunststoff-Gaumenplatte einbettbaren Dehnschraubenkörperteilen (10, 12) sowie mit einer Gewindespindel (14) und wenigstens einem Führungsstift (16), wobei die Gewindespindel zu beiden Seiten eines Mittelabschnitts (14a, 14g), der mit einer Ansetzstelle (14b) für ein Werkzeug zum Drehen der Gewindespindel versehen ist, Spindelabschnitte mit gegenläufigen Gewinden besitzt, welche zur Veränderung des Abstands der beiden Dehnschraubenkörperteile (10, 12) voneinander in mit entsprechenden Innengewinden versehene Kanäle (21) der Dehnschraubenkörperteile eingreifen, und wobei die Dehnschraubenkörperteile Führungsöffnungen (26) für den Durchtritt des parallel zur Gewindespindel verlaufenden Führungsstifts (16) sowie für eine Übertragung der in Gewindespindellängsrichtung verlaufenden, durch Drehen der Gewindespindel (14) erzeugbaren Dehnschraubenkräfte geeignete Retentionen (36) zum Verankern im Kunststoff der Gaumenplatten aufweisen, **dadurch gekennzeichnet**, daß die Dehnschraubenkörperteile (10, 12) an ihren voneinander abgewandten äußeren Stirnseiten derart abgestuft sind, daß ein den Kanal (21) aufnehmender erster Bereich (20) eines jeden Dehnschraubenkörperteils (10, 12) in Längsrichtung der Gewindespindel (14) über einen die Führungsöffnung (26) für den Führungsstift (16) aufnehmenden zweiten Bereich (24) des betreffenden Dehnschraubenkörperteils vorspringt, daß die Retentionen (36) an den ersten Bereichen (20) der beiden Dehnschraubenkörperteile (10, 12) angeordnet sind, daß die Kanäle (21; 21') an den einander zugewandten inneren Stirnseiten (28) der beiden Dehnschraubenkörperteile (10, 12) zur Aufnahme des Gewindespindel-Mittelabschnitts (14a, 14g; 14a', 14g') ausgebildet und so in einem Ausgangszustand der Dehnschraube diese inneren Stirnseiten mindestens nahezu gegeneinander anlegbar sind, und daß die Dehnschraubenkörperteile (10, 12; 10', 12') wenigstens eine Aussparung (38) aufweisen, durch welche im Ausgangszustand der Dehnschraube die Werkzeug-Ansetzstelle (14b) der Gewindespindel (14; 14') von außen zugänglich ist.

2. Dehnschraube nach Anspruch 1, **dadurch gekennzeichnet**, daß im Ausgangszustand der Dehnschraube die inneren Stirnseiten (28) der Dehnschraubenkörperteile (10, 12; 10', 12') im Bereich der Führungsöffnungen (26; 26') mindestens nahezu gegeneinander anliegen.

3. Dehnschraube nach Anspruch 1 oder 2, **dadurch gekennzeichnet**, daß der Kanal (21) mindestens eines der Dehnschraubenkörperteile (10, 12; 10', 12') an dessen innere Stirnseite (28) angrenzend eine gegenüber seinem Innengewinde (22) erweiterte Aussparung (30, 32) zur Aufnahme des Gewindespindel-Mittelabschnitts (14a, 14g) aufweist.

4. Dehnschraube nach Anspruch 3, **dadurch gekennzeichnet**, daß die Kanäle (21) der beiden Dehnschraubenkörperteile (10, 12) eine derartige erweiterte Aussparung (30, 32) zur Aufnahme jeweils des halben Gewindespindel-Mittelabschnitts (14a, 14g) aufweisen.

5. Dehnschraube nach einem oder mehreren der Ansprüche 1 bis 4, **dadurch gekennzeichnet**, daß der erste Bereich (20) um ungefähr die und vorzugsweise um mehr als die - in Längsrichtung der Gewindespindel (14) gemessene - Wandstärke des zweiten Bereichs (24) über letzteren vorspringt.

6. Dehnschraube nach einem oder mehreren der vorstehenden Ansprüche, **dadurch gekennzeichnet**, daß zu beiden Seiten der Gewindespindel (14) angeordnete Führungsstifte (16) vorgesehen sind und jedes Dehnschraubenkörperteil (10, 12) im Schnitt längs der von den Längsmittelachsen von Gewindespindel und wenigstens einem der Führungsstifte definierten Ebene einen ungefähr hutförmigen Querschnitt aufweist.

7. Dehnschraube nach einem oder mehreren der vorstehenden Ansprüche, **dadurch gekennzeichnet**, daß der Führungsstift (16) als zylindrischer Körper ausgebildet ist, dessen beide Enden zur Bildung von mit den äußeren Stirnseiten der Dehnschraubenkörperteile (10, 12) zusammenwirkenden Anschlägen (16b) von der Zylinderform abweichend ausgebildet sind.

8. Dehnschraube nach einem oder mehreren der vorstehenden Ansprüche, **gekennzeichnet durch** einen die zusammengefahrenen Dehnschraubenkörperteile (10, 12) zumindest teilweise umfassenden Dehnschraubenhalter (18), welcher vollständig außerhalb der Fuge (42) zwischen den Dehnschraubenkörperteilen (10, 12) liegt.

9. Dehnschraube nach Anspruch 8, **dadurch gekennzeichnet**, daß der Dehnschraubenhalter (18) die Werkzeug-Ansetzstelle (14b) der Gewindespindel (14) und vorzugsweise auch die Fuge (42) zwischen den beiden Dehnschraubenkörperteilen (10, 12) abdeckt.

10. Dehnschraube nach einem oder mehreren der vorstehenden Ansprüche, dadurch gekennzeichnet, daß die beiden Dehnschraubenkörperteile (10, 12), abgesehen von ihren Innengewinden (22) und einem insbesondere vorgesehenen Anschlag (40) für den Dehnschraubenhalter (18), identisch ausgebildet sind.

11. Dehnschraube nach einem oder mehreren der Ansprüche 1 bis 10, dadurch gekennzeichnet, daß am Umfang des ersten Bereichs (20) eines jeden Dehnschraubenkörperteils (10, 12) mindestens eine als Ringnut (36) ausgebildete Retention vorgesehen ist.

12. Dehnschraube nach einem oder mehreren der Ansprüche 1 bis 11, dadurch gekennzeichnet, daß die Gewindespindel (14) und der Führungsstift (16) gleich lang sind.

13. Dehnschraube nach einem oder mehreren der Ansprüche 1 bis 11, dadurch gekennzeichnet, daß die Gewindespindel (14') länger ist als der Führungsstift (16').

14. Dehnschraube nach einem oder mehreren der vorstehenden Ansprüche, dadurch gekennzeichnet, daß sich die Führungsflächen der Führungsöffnungen (26) bis an denjenigen Bereich der inneren Stirnflächen (28) der Dehnschraubenkörperteile (10, 12) erstrecken, die im Ausgangszustand der Dehnschraube gegeneinander anliegen.

15. Dehnschraube nach einem oder mehreren der vorstehenden Ansprüche, dadurch gekennzeichnet, daß die Dicke - in Längsrichtung der Gewindespindel (14) gemessen - eines vom Gewindespindel-Mittelabschnitt (14a, 14g; 14a', 14g') gebildeten Spindelkopfs (14a; 14a') mindestens gleich, vorzugsweise größer ist als die Summe der Dicken der einander benachbarten zweiten Bereiche (24; 24') der beiden Dehnschraubenkörperteile (10, 12; 10', 12').

**Claims**

1. Expansion screw for tooth adjustment having two expansion screw body members (10, 12) each embeddable in a plastic palate plate, also having a threaded spindle (14) and at least one guide pin (16), said threaded spindle having spindle sections with opposite threads on either side of a central section (14a, 14g) provided with a point of attachment (14b) for a tool for turning the threaded spindle, said spindle sections engaging in channels (21) provided with corresponding internal threads in the expansion screw body members for altering the distance of the two expansion screw body members (10, 12) from one another, said expansion screw body members having guide openings (26) for the passage of the guide pin (16) extending parallel to the threaded spindle, and also having retention means (36) for anchorage in the plastic of the palate plates, said retention means being suited for transmission of the expansion screw forces generatable by turning the threaded spindle (14) and oriented in the longitudinal direction of the threaded spindle,

characterized in that the expansion screw body members (10, 12) are stepped at their outer end faces remote from one another such that a first region (20) of each expansion screw body member (10, 12) accommodating the channel (21) protrudes in the longitudinal direction of the threaded spindle (14) beyond a second region (24) of the pertinent expansion screw body member accommodating the guide opening (26) for the guide pin (16), that the retention means (36) are arranged at the first regions (20) of the two expansion screw body members (10, 12), that the channels (21; 21') are designed at the facing inner end faces (28) of the two expansion screw body members (10, 12) to accommodate the central section (14a, 14g; 14a', 14g') of the threaded spindle and so in an initial state of the expansion screw these inner end faces are adapted to abut at least almost against one another, and that the expansion screw body members (10, 12; 10', 12') have at least one recess (38), the tool attachment point (14b) of the threaded spindle (14; 14') being accessible from the outside through said recess in the initial state of the expansion screw.

2. Expansion screw as defined in claim 1, characterized in that in the initial state of the expansion screw the inner end faces (28) of the expansion screw body members (10, 12; 10', 12') abut at least almost on one another in the region of the guide openings (26; 26').

3. Expansion screw as defined in claim 1 or 2, characterized in that the channel (21) of at least one of the expansion screw body members (10, 12; 10', 12') has adjacent its inner end face (28) a recess (30, 32) enlarged in relation to its internal thread (22) for accommodating the central section (14a, 14g) of the threaded spindle.

4. Expansion screw as defined in claim 3, characterized in that the channels (21) of the two expansion screw body members (10, 12) comprise such an enlarged recess (30, 32) for respectively accommodating half the central section (14a, 14g) of the threaded spindle.

5. Expansion screw as defined in one or more of claims 1 to 4, characterized in that the first region (20) protrudes beyond the second region (24) by approximately the wall thickness and preferably by more than the wall thickness - measured in the longitudinal direction of the threaded spindle (14) - of said second region.

6. Expansion screw as defined in one or more of the preceding claims, characterized in that guide pins (16) arranged on either side of the threaded spindle (14) are provided and each expansion screw body member (10, 12) has an approximately hat-shaped cross section along the plane defined by the longitudinal central axes of threaded spindle and at least one of the guide pins.

7. Expansion screw as defined in one or more of the preceding claims, characterized in that the guide pin (16) is designed as a cylindrical body, its two ends deviating in design from the cylindrical shape to form stops (16b) interacting with the outer end faces of the expansion screw body members (10, 12).

8. Expansion screw as defined in one or more of the preceding claims, characterized by an expansion screw holder (18) enclosing at least partially the expansion screw body members (10, 12) drawn together, said holder lying completely outside the interstice (42) between the expansion screw body members (10, 12).

9. Expansion screw as defined in claim 8, characterized in that the expansion screw holder (18) covers the tool attachment point (14b) of the threaded spindle (14) and preferably the interstice (42) between the two expansion screw body members (10, 12), as well.

10. Expansion screw as defined in one or more of the preceding claims, characterized in that the two expansion screw body members (10, 12) are of identical design, apart from their internal threads (22) and a stop (40) provided especially for the expansion screw holder (18).

11. Expansion screw as defined in one or more of claims 1 to 10, characterized in that at least one retention means designed as an annular groove (36) is provided at the circumference of the first region (20) of each expansion screw body member (10, 12).

12. Expansion screw as defined in one or more of claims 1 to 11, characterized in that the threaded spindle (14) and the guide pin (16) are of equal length.

13. Expansion screw as defined in one or more of claims 1 to 11, characterized in that the threaded spindle (14') is longer than the guide pin (16').

14. Expansion screw as defined in one or more of the preceding claims, characterized in that the guide faces of the guide openings (26) extend as far as that region of the inner end faces (28) of the expansion screw body members (10, 12) abutting on one another in the initial state of the expansion screw.

15. Expansion screw as defined in one or more of the preceding claims, characterized in that the thickness - measured in the longitudinal direction of the threaded spindle (14) - of a spindle head (14a; 14a') formed by the central section (14a, 14g; 14a', 14g') of the threaded spindle is at least equal to, preferably greater than the sum of the thicknesses of the second regions (24; 24') of the two expansion screw body members (10, 12; 10', 12') adjacent one another.

**Revendications**

1. Vis d'extension pour la correction de l'alignement des dents, comportant deux parties (10, 12) de corps de vis d'extension qui peuvent être noyées dans une plaque palatine en matière plastique, et comportant une broche filetée (14) et au moins une goupille de guidage (16), la broche filetée possédant sur les deux côtés d'un tronçon médian (14a, 14g), qui est pourvu d'un emplacement d'attaque (14b) pour un outil destiné à tourner la broche filetée, des tronçons de broche à filetages contraires qui s'engagent dans des canaux (21) pourvus de taraudages correspondants des parties de corps de vis pour modifier l'écartement des deux parties (10, 12) de corps de vis l'une par rapport à l'autre, et les parties de corps de vis présentant des ouvertures de guidage (26) pour le passage de la goupille de guidage (16) qui s'étend parallèlement à la broche filetée, et des moyens de retenue (36) pour l'ancrage dans la matière plastique de la plaque palatine, lesquels sont appropriés à transmettre les forces dirigées dans la direction longitudinale de la broche filetée et produites par rotation de la tige filetée (14),
caractérisée en ce que les parties (10, 12) de corps de vis d'extension sont étagées sur leurs faces frontales extérieures détournées l'une de l'autre, de telle sorte qu'une première région (20) de chaque partie (10, 12) de corps de vis, qui reçoit le canal (21), fait saillie en direction longitudinale de la broche filetée (14), au-delà d'une seconde région (24) de ladite partie de corps de vis, qui reçoit l'ouverture de guidage (26) pour la goupille de guidage (16), en ce que les moyens de retenue (36) sont prévus sur les premières régions (20) des deux parties (10, 12) de corps de vis, en ce que les canaux (21 ; 21') sont formés sur les faces frontales (28) orientées l'une vers l'autre des deux parties (10, 12) de corps de vis pour recevoir le tronçon médian (14a, 14g ; 14a', 14g') de la broche filetée, et en ce qu'à un état initial de la vis d'extension, ces faces frontales intérieures peuvent ainsi être appliquées au moins pratiquement l'une contre l'autre, et en ce que les parties (10, 12 ; 10', 12') de corps de vis présentent au moins un évidement (38) à travers lequel l'emplacement (14b) de la broche filetée (14 ; 14') prévu pour l'attaque d'un outil est accessible de l'extérieur à l'état initial de la vis d'extension.

2.  Vis d'extension selon la revendication 1, caractérisée en ce qu'a l'état initial de la vis d'extension, les faces frontales (28) intérieures des parties (10, 12 ; 10', 12') de corps de vis sont appliquées au moins pratiquement l'une contre l'autre dans la région des ouvertures de guidage (26, 26').

3.  Vis d'extension selon l'une ou l'autre des revendications 1 et 2, caractérisée en ce que le canal (21) d'au moins une des parties (10, 12 ; 10', 12') de corps de vis présente un évidement (30, 32) évasé par rapport à son taraudage (22), qui est adjacent à sa face frontale (28) intérieure, cet évidement étant destiné à recevoir le tronçon médian (14a, 14g) de la broche filetée.

4.  Vis d'extension selon la revendication 3, caractérisée en ce que les canaux (21) des deux parties (10, 12) de corps de vis présentent un tel évidement (30, 32) évasé pour recevoir chacun la moitié du tronçon médian (14a, 14g) de la broche filetée.

5.  Vis d'extension selon l'une ou plusieurs des revendications 1 à 4, caractérisée en ce que la première région (20) fait saillie au-delà de la seconde région (24) d'une valeur approximativement égale à l'épaisseur et de préférence supérieure à l'épaisseur - mesurée en direction longitudinale de la broche filetée (14) - de la paroi de ladite seconde région.

6.  Vis d'extension selon l'une ou plusieurs des revendications précédentes, caractérisée en ce qu'on prévoit des goupilles de guidage (16) agencées des deux côtés de la broche filetée (14), et en ce que chaque partie (10, 12) de corps de vis d'extension présente en coupe le long du plan défini par les axes médians longitudinaux de la broche filetée et par au moins une des goupilles de guidage, une section transversale qui a approximativement la forme d'un chapeau.

7.  Vis d'extension selon l'une ou plusieurs des revendications précédentes, caractérisée en ce que la goupille de guidage (16) est réalisée en tant que corps cylindrique dont les deux extrémités ont une forme différente de la forme cylindrique pour former des butées (16b) coopérant avec les faces frontales extérieures des parties (10, 12) de corps de vis.

8.  Vis d'extension selon l'une ou plusieurs des revendications précédentes, caractérisée en ce qu'un support (18) de vis d'extension entoure au moins partiellement les parties (10, 12) de corps de vis rapprochées l'une de l'autre, ledit support se trouvant complètement en dehors du joint (42) entre les parties (10, 12) de corps de vis.

9.  Vis d'extension selon la revendication 8, caractérisée en ce que le support (18) de vis d'extension recouvre l'emplacement (14b) de la broche filetée (14) prévu pour l'attaque d'un outil et de préférence aussi le joint (42) entre les deux parties (10, 12) de corps de vis.

10. Vis d'extension selon l'une ou plusieurs des revendications précédentes, caractérisée en ce que les deux parties (10, 12) de corps de vis sont réalisées de manière identique, à l'exception de leurs taraudages (22) et d'une butée (40) en particulier prévue pour le support (18) de vis d'extension.

11. Vis d'extension selon l'une ou plusieurs des revendications 1 à 10, caractérisée en ce qu'au moins un moyen de retenue réalisé sous forme de gorge annulaire (36) est prévu sur la circonférence de la première région (20) de chaque partie (10, 12) de corps de vis.

12. Vis d'extension selon l'une ou plusieurs des revendications 1 à 11, caractérisée en ce que la broche filetée (14) et la goupille de guidage (16) sont de même longueur.

13. Vis d'extension selon l'une ou plusieurs des revendications 1 à 11, caractérisée en ce que la broche filetée (14') est plus longue que la goupille de guidage (16').

14. Vis d'extension selon l'une ou plusieurs des revendications précédentes, caractérisée en ce que les surfaces de guidage des ouvertures de guidage (26) s'étendent jusqu'à celles des régions des faces frontales intérieures (28) des parties (10, 12) de corps de vis qui s'appliquent l'une contre l'autre à l'état initial de la vis d'extension.

15. Vis d'extension selon l'une ou plusieurs des revendications précédentes, caractérisée en ce que l'épaisseur - mesurée en direction longitudinale de la broche filetée (14) - d'un noyau (14a ; 14a') de broche formé par le tronçon médian (14a, 14g ; 14a', 14g') de la broche filetée est au moins égale, de préférence supérieure à la somme des épaisseurs des secondes régions (24 ; 24') voisines l'une de l'autre des deux parties (10, 12 ; 10', 12') de corps de vis d'extension.

FIG.1

FIG.2

FIG.3

FIG.4

FIG.5

FIG.6

# FIG.7